Europäisches Patentamt

European Patent Office

Office européen des brevets

(19)

(11) Veröffentlichungsnummer : **0 105 046 B2**

(12) **NEUE EUROPÄISCHE PATENTSCHRIFT**

(45) Veröffentlichungstag der neuen Patentschrift :
13.11.91 Patentblatt 91/46

(51) Int. Cl.⁵ : **D06N 3/00, C14C 11/00**

(21) Anmeldenummer : 83890127.0

(22) Anmeldetag : 04.08.83

(54) **Verfahren zum Zurichten von Spaltleder oder Vliesen, Vorrichtung zur Durchführung des Verfahrens und nach dem Verfahren zugerichtetes Spaltleder oder Vlies.**

Die Akte enthält technische Angaben, die nach dem Eingang der Anmeldung eingereicht wurden und die nicht in dieser Patentschrift enthalten sind.

(30) Priorität : 04.08.82 DE 3229150

(43) Veröffentlichungstag der Anmeldung :
04.04.84 Patentblatt 84/14

(45) Bekanntmachung des Hinweises auf die Patenterteilung :
11.11.87 Patentblatt 87/46

(45) Bekanntmachung des Hinweises auf die Entscheidung über den Einspruch :
13.11.91 Patentblatt 91/46

(84) Benannte Vertragsstaaten :
DE FR GB IT

(56) Entgegenhaltungen :
DD-A- 207 105

(56) Entgegenhaltungen :
DE-A- 587 870
DE-A- 1 912 351
DE-A- 2 144 371
DE-C- 863 540
DE-C- 871 414
DE-C- 2 348 662
DE-C- 2 445 605
FR-A- 1 581 307
FR-A- 2 150 649
Bayer Broschüre
"AV-Baycast-Beschichtungsverfahren"

(73) Patentinhaber : Schaefer, Philipp
Oberstrasse 16
W-3000 Hannover 1 (DE)

(72) Erfinder : Schaefer, Helmut
Winzlerstrasse 114
W-6780 Pirmasens (DE)

(74) Vertreter : Brauneiss, Leo, Dipl.Ing. et al
Patentanwälte Dipl.-Ing. Leo Brauneiss,
Dipl.-Ing. Dr. Helmut Wildhack Postfach 281
Landstrasser Hauptstrasse 50
A-1031 Wien (AT)

EP 0 105 046 B2

## Beschreibung

Die Erfindung betrifft ein Verfahren zum Zurichten von Spaltleder oder Vliesen, wobei eine Seite des Spaltleders oder Vlieses über eine Verbindungsschicht mit einer eine Zurichtung bildenden Beschichtung verbunden wird. Ferner betrifft die Erfindung eine Vorrichtung zur Durchführung des Verfahrens sowie ein Spaltleder oder Vlies, erhalten durch das Verfahren.

Es ist bereits bekannt, Spaltleder oder Lederhäute mit beschädigter Oberfläche durch Aufkaschieren vorgefertigter Kunststoffolien zu veredeln. Hiezu wird auf das Spaltleder ein Klebstoff aufgetragen, dann die Folie aufgelegt und in einer beheizten Presse mit dem Spaltleder verklebt. Hiebei ist es bekannt, in der Presse ein Prägeblech anzuordnen, damit die Folie beim Verpressen eine Narbenstruktur erhält. Hiezu muß die Folie erweicht werden, die in der Presse auftretenden Temperaturen sind daher erheblich und betragen etwa 170 °C. Durch diese Temperaturen sowie durch die in der Presse auftretenden Drücke wird jedoch das Leder stark in Mitleidenschaft gezogen, und es verfestigt sich das Leder in unerwünschter Weise.

Man hat auch bereits vorgeschlagen, für die Verklebung des Spaltleders mit der Kunststoffolie eine Hochfrequenz-Plattenpresse mit einer Silikonkautschukform zu verwenden. Das mit Klebstoff bestrichene Leder und die darauf angeordnete Folie werden hiebei in die kalte Silikonkautschukform eingelegt, worauf eine Erwärmung durch Hochfrequenz erfolgt. Da jedoch das Leder stets Feuchtigkeit enthält, erwärmt es sich im Hochfrequenzfeld gleichfalls und die erwähnten Nachteile werden dadurch nicht beseitigt.

Aus der DE-C-871 414 ist ein Verfahren zum Zurichten von Spaltleder bekannt, bei dem auf das Spaltleder zunächst eine Zwischenschicht aufgetragen wird, die z. B. besonders fest auf dem Leder haftet, wobei auf die verfestigte Zwischenschicht eine oder mehrere weitere Schichten aufgetragen werden, die die spätere Oberfläche des Leders bilden, wobei die aus thermoplastischen Massen gebildeten Schichten durch Wärmezufuhr miteinander verschweißt werden.

Aus der DE-C-2 445 605 ist ein Verfahren zum Zurichten von Spaltleder bekannt, bei welchen die mit dem Spaltleder zu verbindende Beschichtung aus einer Polyurethandispersion gebildet wird, die mit Mikrohohlkugeln oder mit ein Treibmittel enthaltenden Kompaktteilchen versehen ist, welche unter Wärmezufuhr Mikrohohlkugeln bilden, wobei die Hülle der Mikrohohlkugeln, in welchen ein Gas eingeschlossen ist, vorzugsweise aus Vinylidenchlorid-Copolymerisat besteht. Die wässerige Polyurethandispersion wird hiebei entweder direkt auf das zu beschichtende Leder oder auf eine wieder entfernbare Unterlage aufgetragen, wobei im letzteren Fall das Leder auf die Polyurethandispersion aufgelegt wird. Die Polyurethandispersion wird dann unter Wärmeeinwirkung verfestigen gelassen und es wird, falls eine Unterlage verwendet wurde, diese Unterlage entfernt. Die Trocknung der auf das Leder aufgebrachten Polyurethandispersion kann bei diesem bekannten Verfahren beispielsweise mittels eines Vakuumtrockners erfolgen, wobei das Wasser durch das Leder hindurch entfernt wird. Bei solchen bekannten Vakuumtrocknern wird das zugerichtete tropfnasse Spaltleder zwischen einer beheizten Stahlplatte als Unterlage und einem filzartigen porösen Flächenmaterial angeordnet, welches gegen das Leder gedrückt wird, wobei durch Vakuum der Wasserdampf durch das filzartige poröse Flächenmaterial abgesaugt wird.

Aus der FR-A-1 581 307 ist ein Verfahren zur Herstellung eines zugerichteten Spalt- oder Narbenleders bekannt georden, nach welchem auf einem mit einer Prägung versehenen, endlosen kalten Trennpapier ein Beschichtungsmaterial mittels einer Rakel aufgebracht und dieses Beschichtungsmaterial anschließend in einem Durchlaufofen ausgehärtet wird. Nachteilig ist bei dieser Vorgangsweise, daß die Strukturierung auf dem Trennpapier eine gewisse Tiefe nicht überschreiten kann und daher auf der Zurichtung nicht jedes gewünschte Narbenmuster hergestellt werden kann, daß es nicht möglich ist, dünne Beschichtung mit einem ausgeprägten Narbenmuster herzustellen, weil beim Aufrakeln des Beschichtungsmaterials immer die Vertiefungen vollständig ausgefüllt werden müssen, und daß bei der Trocknung im Durchlaufofen sich oberflächlich eine Haut bildet, die ein Entweichen der flüchtigen Bestandteile des Beschichtungsmaterials verhindert und dadurch die Blasenbildung in der Folie begünstigt.

Auf die auf dem Trennpapier gebildete Folie wird bei diesem bekannten Verfahren eine Klebstoffschicht aufgetragen und anschließend des Leder auf die feuchte Klebstoffschicht aufgelegt und angedrückt sowie in einem Ofen längere Zeit auf etwa 100°C erhitzt, um den Klebstoff aushärten zu lassen. Diese Behandlung begünstigt gleichfalls die Bildung von Blasen und Lufteinschlüssen in der Klebstoffschicht und in den Randbereichen zur Folie bzw. zum Leder und verursacht vor allem ein Verhärten bzw. Versteifen des Leders, so daß dieses nicht mehr die gewünschte Weichheit und Geschmeidigkeit aufweist. Dieses Verhärten bzw. Versteifen des Leders wird auch dadurch bewirkt, daß die im Klebstoff enthaltenen Lösungsmittel bei ihrer Verflüchtigung in das Leder eindringen.

Es ist auch bekannt, die Beschichtung nach ihrer Verfestigung einer Druck- und Wärmewirkung auszusetzen sowie mit einem Finish zu versehen. Bei allen bekannten Verfahren ist es schwierig, eine Zurichtung mit gleichmäßiger Dicke und mit formschöner Oberfläche auf einfache Weise herzustellen. So besteht das Problem, Lufteinschlüsse in der Beschichtung selbst oder zwischen der Beschichtung und dem Spaltleder zu vermieden. Derartige Lufteinschlüsse entstehen, wenn die Beschichtung auf der Oberfläche und im Kontaktbereich zum Leder rascher trocknet als in der Mitte und sich daher diese bereiche verfestigen, wogegen der mittlere Bereich der Beschichtung noch flüssige bzw. wässerige Bestandteile enthält, die durch Wärmezufuhr verdampfen und dann Blasen bilden. Zu Gas- oder Lufteinschlüssen kann es auch dann kommen, wenn man eine Folie oder einen bereits getrockneten Binderfilm mittels Klebstoff mit einem Spaltleder in einer beheizten Presse verklebt. Durch die Wärmezufuhr entstehen aus den verdampfenden Restlösungsmitteln oder aus anderen, im Leder oder im Binder vorhandenen Substanzen, welche gleichfalls verdampfen, Gase, die eine Blasenbildung hervorrufen, welche störend wirkt und die Verankerung der Beschichtung mit dem Spaltleder in ungünstiger Weise beeinträchtigt. Zwar verschwinden die Blasen in der Regel wieder, wenn man des zugerichtete Leder in der Form bzw. Presse abkühlen läßt, bevor man es entnimmt. Eine solche Vorgangsweise ist jedoch sehr zeitaufwendig, da der Abkühlvorgang lange dauert, die Produktionszeit wird dadurch also erheblich vergrößert. Vor allem aber ist diese Vorgangsweise auch mit einem wesentlich vergrößerten Energieaufwand verbunden, da für jedes zuzurichtende Spaltleder die Presse vom abgekühlten Zustand wieder auf den erforderlichen Wert aufgeheizt und dann wieder abgekühlt werden muß.

Aufgabe der vorliegenden Erfindung ist es, ein Verfahren zum Zurichten von Spaltleder oder Vliesen und eine Vorrichtung zur Durchführung des Verfahren zu schaffen, das bzw. die diese Nachteile vermeidet. Insbesondere soll verhindert werden, daß Lufteinschlüsse in der Beschichtung oder zwischen der Beschichtung und dem Spaltleder oder Vlies gebildet werden, auch wenn das zugerichtete Spaltleder oder Vlies ohen vorherige Abkühlung, also im heißen Zustand, der Form bzw. Presse entnommen wird. Außerdem soll erfindungsgemäß ein Verfahren geschaffen werden, bei dessen Anwendung die Beschichtung trotz unterschiedlicher Dicke an den einzelnen Stellen des Spaltleders mit diesem überall in hervorrangender Weise verbunden ist. Weiter sollen beim zugerichteten Spaltleder oder Vlies die guten Eigenschafen des Leders bzw. Vlieses, vor allem Weichheit, Geschmeidigkeit, Feuchtigkeitsaufnahme und Luftdurchlässigkeit erhalten bleiben, das Leder oder Vlies soll sich also nicht verhärten. Schließlich soll das Verfahren rasch und energiesparend, somit rationell und umweltfreundlich durchführbar sein.

Die Lösung dieser Aufgabe erfolgt dadurch, daß ein flüssiges Beschichtungsmaterial in einer dünnen Schicht auf eine vorerwärmte Unterlage augespritzt oder aufgegossen, wird, wobei zumindest die die Struktur aufweisende Oberfläche der Unterlage aus Silikonkautschuk besteht, daß hierauf wenigstens eine Schicht einer vernetzbaren, wässerigen, vorzugsweise Polyurethan enthaltenden Kunststoffdispersion zur Bildung der Verbindungsschicht entweder auf den Film oder auf die eine Seite des Spaltleders oder Vlieses aufgebracht, beispielsweise aufgespritzt oder aufgegossen, wird, derart, daß das Spaltleder oder Vlies mit der Kunststoffdispersion in ihrer Naßphase in Berührung gebracht wird, daß anschließend eine Verpressung mittels der Rollenpresse mit einem solchen Druck erfolgt, daß zwischen dem Spaltleder oder Vlies und dem die Zurichtung bildenden Film ein Teil der aufgebrachten Kunststoffdispersion, vorzugsweise mehr als 3% der aufgebrachten Gesamtmenge, herausgedrückt wird, und daß anschließend die Unterlage mit dem zugerichteten Spaltlder oder Vlies auf einer beheizten Abstützung abgestützt und dadurch von unten erwärmt wird une gleichzeitig auf die der Unterlage abgewendete Seite des zugerichteten Spaltleders oder Vlieses mittels einer Gegenfläche ein Druck ausgeübt und dieses Spaltleder oder Vlies einer Vakuumbehandlung unterworfen wird. Dadurch, daß das flüssige Beschichtungsmaterial auf die vorerwärmte Unterlage aufgebracht wird, erfolgt eine Verfestigung des Materials sofort nach dem Aufbrigen, und zwar von unten nach oben, sich bei der Verfestigung bildende Dampfblasen können somit nach oben entweichen, so daß der nach der Verfestigung gebildete Film blasenfrei ist. Diese sofortige Verfestigung des Beschichtungsmaterials ermöglicht es auch, die Oberfläche der Unterlage aus Silikonkautschuk herzustellen und dennoch den auf der Unterlage gebildeten Film sehr dünn zu machen, da die Verfestigung eintritt, bevor das aufgebrachte flüssige Beschichtungsmaterial auf der hydrophoben Oberfläche aus Silikonkautschuk zu perlen beginnt. Die Verwendung einer Unterlage mit einer Oberfläche aus Silikondautschuk ermöglicht es wieder, dieser Oberfläche jede beliebige Struktur und damit der Zurichtung jede gewünschte Oberflächengestaltung, und zwar auch eine tiefere Narbung, zu geben.

Dadurch, daß die wässerige Kunsststoffdispersion in ihrer Naßphase mit der einen Seite des Spaltleders oder Vlieses in Berührung gebracht wird und anschließend eine Verpressung derart erfolgt, daß ein Teil der aufgebrachten Kunststoffdispersion herausgedrückt wird, wird sichergestellt, daß die Unregelmäßigkeiten in der Oberfläche des Spaltleders oder Vlieses bzw. die Zwischenräume zwischen den von dieser Oberfläche abstehenden Fasern vollständig ausgefüllt werden. Die aus der wässerige Kunststoffdispersion gebildete Schicht bildet einen "Abstandhalter" zwischen der die Sichtfläche bildenden Schicht, welche dadurch sehr dünn sein kann, und der rauhen Struktur des Spaltleders oder Vlieses, so daß dieses keinen direkten Kontakt mit der die Sichtfläche bildenden Schicht aufweist.

Dadurch, daß die Unterlage mit dem zugerichteten Spaltleder oder Vlies auf einer beheizten Abstützung abgestützt und somit von unten erwärmt wird, wobei auf das zugerichtete Spaltleder oder Vlies gleichzeitig ein Druck ausgeübt wird und dieses Spaltleder oder Vlies einer Vakuumbehandlung unterworfen wird, wird sichergestellt, daß die Unterlage gleichmäßig auf einer vorbestimmten Temperatur gehalten wird, so daß die Kunststoffdispersion von unten nach oben erwärmt wird. Die durch diese Erwärmung bewirkte Verdampfung erfolgt dadurch gleichfalls von unten nach oben, so daß die dabei entstehenden Dampfblasen nach oben aufsteigen und zumindest zum Großteil durch die noch flüssige Kunststoffdispersion und das Spaltleder bzw. Vlies entweichen können, wobei dieser Vorgang durch die Vakuumbehandlung unterstützt wird. Es ist somit sichergestellt, daß keine Dampf- bzw. Lufteinschlüsse in der Zurichtung bzw. im Übergangsbereich zum Spaltleder oder Vlies vorhanden sind. Durch die Vakummbehandlung werden die in der wässerigen Kunststoffdispersion angeordneten Feststoffteilchen in den Hohlräume zwischen den vom Spaltleder oder Vlies abstehenden Fasern hineingesaugt und füllen diese praktisch vollständig aus, ohne daß jedoch diese Feststoffteilchen in das Spaltleder oder Vlies selbst eindrigen und dieses verfestigen. Das Spaltleder oder Vlies wirkt vielmehr wir ein Filter, welches die Feststoffteilchen zurückhält, wogegen das Wasser und die bei der Verdampfung desselben entstehenden Luft- bzw. Dampfblasen durch dieses Filter hindurchtreten können.

Die verwendete wässerige Kunststoffdispersion ist ungigtif und somit unweltfreudlich und es treten nur Wasserdämpfe aus.

Wie bereits erwähnt, ist es erforderlich, daß wenigstens eine Schicht einer wässerigen Kunststoffdispersion als Zwischenschicht zwischen dem Spaltleder oder Vlies und der die Sichtfläche bildenden Schicht vorgesehen ist. Zweckmäßig wird jedoch so vorgegangen, daß zunächst eine Schicht einer wässerigen Kunststoffdispersion auf den auf der Unterlage gebildeten Film aufgebracht und anschließend trocknen gelassen wird, worauf eine zweite Schicht einer Kunststoffdispersion auf diese erste, getrocknete Schicht aufgebracht, beispielsweise aufgespritzt oder aufgegossen, wird, und daß auf diese zweite Schicht einer Kunststoffdispersion sofort in der Naßphase das Spaltleder oder Vlies aufgelegt wird, worauf die so gebildete Beschichtung und das Spaltleder oder Vlies miteinander verpreßt und einer Vakuumbehandlung unterworfen werden. Diese Vorgangsweise weist den Vorteil auf, daß zur Erzielung einer vorbestimmten Dicke der aus der Kunststoffdispersion bestehenden Zwischenschicht die zur Bildung der zweiten Schicht benötigte Menge der wässerigen Dispersion wesentlich geringer sein kann. Daher ist auch die Wassermenge geringer, welche nach dem Aufbringen des Spaltleders entfernt werden muß, da ja die Wassermenge von der ersten Schicht bereits vor Aufbringen der zweiten Schicht abgeführt wurde.

Wird die das Finish bildende Schicht aus einer auf die Oberfläche der Unterlage aufgebrachte Polymerlösung gebildet, die nach dem Verdampfen des Lösungsmittels einen zusammenhängenden Film bildet, so ist es, um das Verdampfen dieses Lösungsmittels zu beschleunigen, von Vorteil, wenn die Unterlage auf eine Temperatur unter 100 °C, vorzugsweise auf etwa 95 °C, erwärmt wird. Die erwärmte Unterlage bewirkt auch ein Verdampfen des Wassers in der wässerigen Kunststoffdispersion.

Zweckmäßig ist es, wenn die Polymerlösung 12 bis 28 % eines Polymers, vorzugsweise Polyurethan, sowie gegebenenfalls Nitrozellulose, enthält.

Bei einer bevorzugten Ausführungsform des erfindungsgemäßen Verfahrens enthält die wässerige Kunststoffdispersion Polybutadien sowie gegebenenfalls Polyurethan und/oder Polyacrylat und/oder Polyvinylacetat-Äthylen-Copolymerisat und/oder Polyacrylnitril bzw. Polyacrylat sowie gegebenenfalls ein Vernetzungsmittel, beispielsweise eine Zinkverbindung.

Vorteilhaft ist es, wenn die von der wässerigen Kunststoffdispersion gebildete Zwischenschicht eine Schaumstruktur aufweist, da sich dann das zugerichtete Spaltleder oder Vlies weich und angenehm anfühlt und eine gewisse Elastizität besitzt. Um dies zu erreichen, können der wässerigen Kunststoffdispersion Mikrohohlkugeln beigemengt werden, deren dünne Hülle aus Vinylidenchlorid-Copolymerisat besteht und deren Inneres ein Gas enthält, es ist aber auch möglich, diese Mikrohohlkugeln zumindest teilweise dadurch zu bilden, daß der wässerigen Kunststoffdispersion ein Treibmittel enthaltende Kompaktteilchen aus Vinylidenchlorid-Copolymerisat beigemengt werden, aus welchen durch Wärmezufuhr diese Mikrohohlkugeln in situ gebildet werden.

Damit eine gute Verpressung in der Rollenpresse erfolgt und Luft- oder Gaseinschlüsse gegen den Rand des beschichteten Spaltleders oder Vlieses befördert werden und dort austreten, ist es zweckmäßig, wenn erfindungsgemäß das Spaltleder oder Vlies mit der Beschichtung durch die Rollenpresse mit einer Geschwindigkeit von weniger als 5 m/min, vorzugsweise weniger als 3 m/min, hindurchgeführt wird.

Die Rollenpresse zur Durchführung des erfindungsgemäßen Verfahrens ist von wenigstens einem Walzenpaar gebildet, wobei wenigstens eine Walze jedes Walzenpaares aus einem elastischen Material besteht und/oder federnd gelagert ist. Rollenpressen zum Verbinden zweier Materialien sind an sich bekannt. Bei der vorliegenden Erfindung werden diese Rollenpressen jedoch zum Verbinden des Spaltleders oder Vlieses mit der aus der Kunststoffdispersion gebildeten, vorzugsweise eine Schaumstruktur aufweisenden Zwischenschicht und dieser Zwischenschicht mit der Finish-Schicht verwendet. Dadurch, daß wenigstens eine Walze jedes Walzenpaares aus einem elastischen Material besteht und-/oder federnd gelagert ist, wird gewährleistet, daß das Spaltleder, welches auf Grund seiner Schwankungen in der Dicke, der Dichte und seines Wassergehaltes sowie seiner Temperaturempfindlichkeit beim Zurichten große Schwierigkeiten bereitet, überall mit dem erforderlichen Druck beaufschlagt wird und so sicher mit der Zurichtung verbunden wird.

Da die Verpressung derart erfolgen soll, daß zwischen dem Spaltleder oder Vlies und der die Sichtfläche der Beschichtung bildenden Schicht ein Teil der Aufgebrachten Kunststoffdispersion herausgedrückt wird, besteht die Gefahr, daß die Walzen durch diese herausgedrückte Dispersion verschmutzen. Um dies zu verhindern, kann erfindungsgemäß zumindest ein Walzenpaar mit einer Wasserreinigungsvorrichtung versehen sein.

Ein kontinuierliches Arbeiten läßt sich erzielen, wenn das Spaltleder oder Vlies mit der Beschichtung auf einer Unterlage durch die Rollenpresse hindurchgeführt wird, die vorzugsweise von einem endlosen Band gebildet ist oder die auf diesem Band transportiert wird. Im letzteren Fall kann eine einzige Unterlage für das Aufbringen der einzelnen Schichten sowie des Spaltleders oder Vlieses, für das Transportieren des beschichteten Spaltleders oder Vlieses durch die Rollenpresse sowie für die Behandlung in der Vakuumvorrichtung verwendet werden, wenn eine solche Behandlung vorgenommen wird.

Diese Vakuumvorrichtung weist erfindungsgemäß wenigstens eine starre, vorzugsweise beheizte Platte mit einer mit einer Prägung versehenen Unterlage für das mit der Beschichtung versehene Spaltleder oder Vlies und eine dieser Unterlage gegenüberliegende, vorzugsweise oberhalb dieser Unterlage angeordnete Gegenfläche auf, wobei Unterlage und Gegenfläche aus einem nicht saugfähigem Material bestehen und relativ zueinander bewegbar angeordnet sind und in ihrer einen Endstellung einen mittels einer Dichtung, beispielsweise aus Silikonkautschuk, abgedichteten Hohlraum begrenzen, der mit einer Vakuumeinrichtung in Verbindung steht, die im Hohlraum ein Vakuum erzeugt. Durch Annäherung von Unterlage und Gegenfläche wird das mit der Beschichtung versehene Spaltleder verpreßt, wobei durch die Vakuumeinrichtung ein Absaugen der Luft- und Gaseinschlüsse erfolgt. Gemäß einer bevorzugten Ausführungsform bestehen sowohl die Unterlage als auch die Gegenfläche aus Kunststoff oder Kautschuk, vorzugsweise aus Silikonkautschuk, oder sind mit einem Überzug aus Kunststoff oder Kautschuk, vorzugsweise Silikonkautschuk, versehen. Der Kunststoff oder Kautschuk kann hiebei durch eine Einlage aus Gewebe und/oder Draht verstärkt sein. Dieser Kunststoff oder Kautschuk bildet einen

Antiadhäsionsbelag, der ein Anhaften der die einzelnen Schichten der Zurichtung bildenden Materialien an Auflage und Gegenfläche verhindert. Durch die Einlage werden die bei der Aufheizung auftretenden Wärmedehnungen begrenzt. Silikonkautschuk ist ein Material, das einerseits hohe Temperaturen aushält, anderseits ein Haften der die Zurichtung bildenden Materialien mit Sicherheit ausschließt.

Die Gegenfläche kann erfindungsgemäß mit kanalartigen Vertiefungen wie Nuten, Riffelungen od. dgl. versehen sein, die mit dem abgedichteten Hohlraum und damit auch mit der Vakuumeinrichtung in Verbindung stehen. Über diese kanalartigen Vertiefungen können die sich bildenden Dämpfe in den abgedichteten Hohlraum entweichen und von dort über die Vakuumeinrichtung abgeführt werden, so daß ein Entstehen von Blasen, Gaseinschlüssen od. dgl. durch diese Dämpfe verhindert wird.

Bei einer anderen Ausführung kann an der Gegenfläche ein Gitter, beispielsweise ein dieses Gitter bildendes Gewebe, aus nicht saugfähigem Material, vorzugsweise aus Monofasern, beispielsweise aus Polyester, befestigt sein, das gegebenenfalls mit Silikon imprägniert ist. Auch durch dieses Gitter werden Zwischenräume gebildet, durch welche die erwähnten Dämpfe abgeführt werden können.

Besonders zweckmäßig ist eine Ausführungsform, bei welcher die Gegenfläche von einer Membrane gebildet ist. wobei der Raum zwischen der Membrane und der Unterlage mit der Vakuumeinrichtung in Verbindung steht. Wird in diesem Raum ein Vakuum erzeugt, so wird hiedurch die Membrane gegen das mit der Zurichtung versehene Spaltleder oder Vlies, welches auf der Auflage ruht, gedrückt und hiedurch druckbeaufschlagt, wobei noch der Vorteil entsteht, daß die Druckbeaufschlagung vom Zentrum ausgehend nach und nach in Richtung zum Rand des Spaltleders oder Vlieses erfolgt, so daß die sich bildenden Gasblasen in Richtung zum Rand des Spaltleders od. dgl. geschoben werden und dort austreten.

Die Unterlage ist zweckmäßig an der beheizten, vorzugsweise aus Metall bestehenden, Platte abhebbar abgestützt. Wie bereits erwähnt, kann dann ein und dieselbe Unterlage für das Aufbringen der einzelnen die Zurichtung bildenden Schichten und des Spaltleders, für die Verpressung der Schichten mit dem Spaltleder in der Rollenpresse und für die Behandlung des zuge richteten Spaltleders oder Vlieses in der Vakuumvorrichtung verwendet werden.

Ein rationelles Arbeiten kann weiters dadurch erzielt werden, wenn die Auflage und die Gegenfläche in einer Richtung parallel zur Ebene dieser Auflage bzw. Gegenfläche relativ zueinander verschiebbar angeordnet sind, da dann die Gegenfläche mit der Vakuumeinrichtung jeweils immer im Arbeitseinsatz in Verbindung mit einer Auflage, auf der ein zugerichtetes Spaltleder aufruht, verwendet werden kann, wobei diese Auflage bereits beheizt werden kann, bevor die Gegenfläche oberhalb dieser Auflage angeordnet wird.

Das erfindungsgemäß zugerichtete Spaltleder oder Vlies ist dadurch gekennzeichnet, daß die rauhe Seite des Spaltleders oder Vlieses mit ihren abstehenden Fasern od. dgl. in eine, vorzugsweise eine Schaumstruktur aufweisende, aus einer wässerigen Kunststoffdispersion gebildete, insbesondere Polybutadien enthaltende Schicht mit einer Stärke zwischen 0,12 und 0,45 mm eingebettet ist, deren dem Spaltleder oder Vlies abgewendete Fläche mit einem, vorzugsweise aus einer verfestigten polymeren Lösung bestehenden, eine Narbenstruktur aufweisenden Finish mit einer Stärke von weniger als 0,1 mm versehen ist.

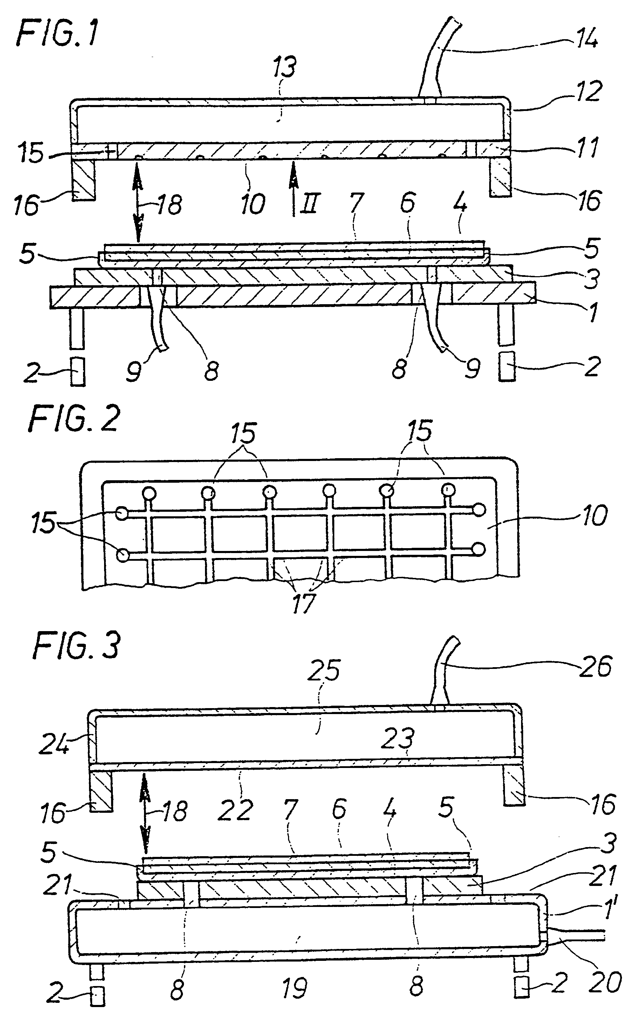

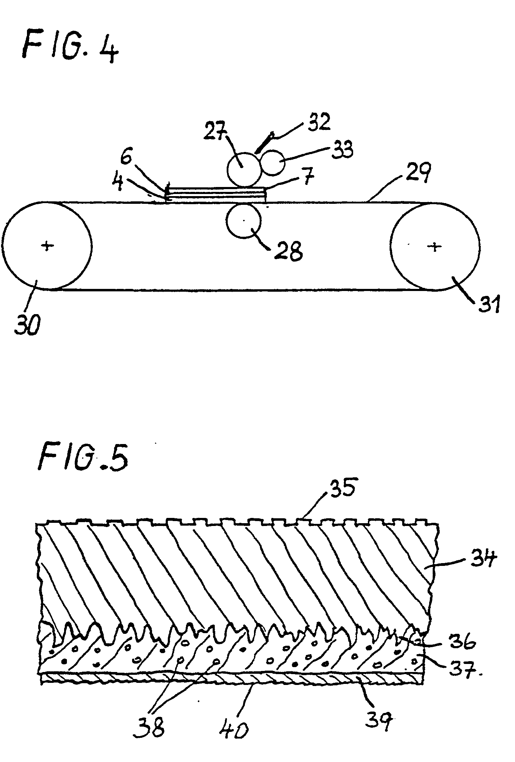

In der Zeichnung ist die Erfindung an Hand von Ausführungsbeispielen schematisch veranschaulicht. Fig. 1 zeigt im Schnitt eine erste Ausführungsform einer erfindungsgemäßen Vakuumvorrichtung. Fig. 2 stellt eine teilweise Draufsicht auf die Gegenfläche in Richtung des Pfeiles II in Fig. 1 dar. Fig. 3 zeigt eine weitere Ausführung einer erfindungsgemäßen Vakuumvorrichtung im Schnitt. Fig. 4 zeigt in Seitenansicht eine erfindungsgemäß Rollenpresse und Fig. 5 stellt im Schnitt und in wesentlich vergrößertem Maßstab ein zugerichtetes Spaltleder dar.

Die in den Fig. 1 und 2 gezeigte Vakuumvorrichtung weist einen Tisch 1 auf, der auf Füßen 2 abgestützt ist und auf dem eine beheizte metallische Platte 3 angeordnet ist. Die Beheizung der Platte 3 erfolgt beispielsweise durch in diese Platte 3 eingebettete elektrische Heizdrähte. Es kann aber die Beheizung auch auf jede andere beliebige Weise vorgenommen werden. Auf der beheizten Platte 3 ruht eine Unterlage 4 aus Silikonkautschuk auf. Die Unterlage 4 kann von der beheizten Platte 3 entfernt werden und wird durch Vakuum auf dieser beheizten Platte 3 gehalten. Hierzu sind in der beheizten Platte Öffnungen 8 vorgesehen, welche über Schläuche 9 mit einer nicht dargestellten Vakuumeinrichtung verbunden sind.

Auf die Unterlage 4 wird zunächst, und zwar außerhalb der Vakuumvorrichtung, eine Polymerlösung in einer dünnen Schicht in einer Menge aufgespritzt, daß nach Trocknen des Lösungsmittels ein zusammenhängender Film gebildet wird. Hierauf wird auf diesen Film eine wässerige Kunststoffdispersion in einer oder in mehreren Schichten aufgetragen, wobei vor dem Auftragen der jeweils nächsten Schicht immer die vorhergehende Schicht trocknen gelassen wird. Der aus der Polymerlösung gebildete Film sowie die aus der Kunststoffdispersion gebildete Schicht bilden die Zurichtung, welche in Fig. 1 mit 6 bezeichnet ist. Auf die zuletzt aufgetragene Schicht der wässerigen Kunststoffdispersion wird im noch nassen Zustand dieser Schicht das Spaltleder 7 aufgelegt. Damit beim Aufbringen der wässerigen Kunststoffdispersion diese nicht über den Rand der Unterlage 4 abfließt, ist diese Unterlage mit einem hochgezogenen Rand 5 versehen.

Nach dem Aufbringen der einzelnen Beschichtungen und des Spaltleders wird die Unterlage zusammen mit den einzelnen die Zurichtung bildenden Schichten und dem Spaltleder durch die in Fig. 4 dargestellte und später noch näher beschriebene Rollenpresse hindurchgeführt und schließlich auf der beheizten Platte 3 der Vakuumvorrichtung abgestützt und mittels des Vakuums in der beschriebenen Weise fixiert.

Der Unterlage 4 gegenüberliegend ist eine Gegenfläche 10 angeordnet, die sich auf einer starren Gegenplatte 11 befindet, die in einem Rahmen 12 gelagert ist. Der Rahmen 12 umschließt mit der Gegenplatte 11 einen Raum 13, der über einen Schlauch 14 mit der Vakuumeinrichtung verbunden ist. Am Rand der Gegenplatte 11 befinden sich Öffnungen 15, die in den Raum 13 führen. Den Öffnungen 15 benachbart ist eine druckelastische Dichtung 16 angeordnet, die vorzugsweise aus Silikonkautschuk besteht.

Die Gegenfläche 10 ist mit einem Antiadhäsionsbelag, vorzugsweise aus Silikonkautschuk, versehen. Der Antiadhäsionsbelag kann aber auch aus Polysiloxan, Polyolefinen oder Fluorpolymerisaten bestehen. Ferner ist, wie aus Fig. 2 hervorgeht, die Gegenfläche 10 mit kanalartigen Vertiefungen 17 in Form eines Rasters versehen, die bis zu den Öffnungen 15 führen, so daß entstehende Dämpfe über diese Vertiefungen 17 und die Öffnungen 15 in den Raum 13 entweichen und von dort über den Schlauch 14 abgezogen werden können.

Die beheizte Platte 3 und die Gegenplatte 11 sind in Richtung des Doppelpfeiles 18 relativ zueinander verschiebbar angeordnet, wobei zweckmäßig durch eine nicht dargestellte Vorrichtung die beheizte Platte 3 verschiebbar ist, wogegen die Gegenplatte 11 ortsfest angeordnet ist. Wenn die Gegenfläche 10 am Spaltleder 7 anliegt, erfolgt über die Dichtung 16 eine Abdichtung zwischen der Gegenplatte 11 und der Platte 3, so daß ein abgedichteter Hohlraum entsteht, der über die Öffnungen 15 und den Raum 13 sowie den Schlauch 14 mit der Vakuumeinrichtung in Verbindung steht.

Anstelle der kanalartigen Vertiefungen 17 kann auf der planen Gegenfläche 10 ein beispielsweise aus einem Gewebe bestehendes Gitter befestigt sein. Das Gewebe besteht hiebei vorzugsweise aus Monofasern, beispielsweise aus Polyester, und ist mit Silikon imprägniert. Auch durch dieses ein Gitter bildende Gewebe werden Hohlräume geschaffen, über welche entstehende Dämpfe zu den Öffnungen 15 entweichen können.

Bei der Ausführungsform nach Fig. 3 sind die beheizte Platte 3 und die auf dieser Platte aufruhende, gegebenenfalls mit einem hochgezogenen Rand 5 versehene Unterlage 4 ebenso wie bei der Ausführungsform nach Fig. 1 ausgebildet. Bei dieser Ausführungsform weist jedoch der Tisch 1', auf dem die beheizte Platte 3 angeordnet ist, einen Hohlraum 19 auf, der über eine Schlauchverbindung 20 mit der Vakuumeinrichtung in Verbindung steht. In diesen Hohlraum 19 münden einerseits die Öffnungen 8 in der beheizten Platte 3, anderseits weitere, außerhalb der beheizten Platte 3 angeordnete Öffnungen 21.

Die Gegenfläche 22 ist hier von einer Membrane 23 gebildet, die in einem Rahmen 24 eingespannt ist, der wieder eine druckelastische Gummidichtung 16 aufweist. Auch die Membrane kann mit kanalartigen Vertiefungen versehen sein oder es kann an der Membrane ein von einem Gewebe gebildetes Gitter befestigt sein, wie dies in Verbindung mit den Figuren 1 und 2 beschrieben ist, um das Abführen entstehender Dämpfe über die Öffnungen 21 zu ermöglichen.

Die beheizte Platte 3 und der die Membrane 23 tragende Rahmen 24 können wieder relativ zueinander in Richtung des Doppelpfeiles 18 bewegt werden, wobei in diesem Fall zweckmäßig der Rahmen 24 abgesenkt wird, bis die Dichtung 16 an der Tischoberseite anliegt. Anschließend wird über die Leitung 20 ein Vakuum aufgebracht, welches sich bei abgesenktem Rahmen 24 auch in dem von der Tischplatte und der Membrane 23 begrenzten, über die Dichtung 16 abgedichteten Hohlraum ausbildet. Dadurch wird die Membrane 23 nach unten gezogen und auf das Spaltleder 7 aufgepreßt. Die Druckbeaufschlagung des Spaltleders 7 erfolgt hiebei von innen nach außen, da beim Anlegen eines Vakuums zunächst das Zentrum der Membrane nach unten gesaugt wird und dann von diesem Zentrum ausgehend die äußeren Bereiche der Membrane an das Spaltleder 7 angedrückt werden. Dies ist von Vorteil, da hiedurch entstehende Blasen und Gaseinschlüsse in der Beschichtung und im Verbindungsbereich zwischen der Beschichtung und dem Spaltleder ausgetrieben werden.

Der Druck, den die Membrane 23 auf das Spaltleder ausübt, kann noch dadurch vergrößert werden, daß in dem von der Membrane 23 und dem Rahmen 24 begrenzten Raum 25 über eine Leitung 26 ein Druckmedium, beispielsweise Druckluft, zugeführt wird.

Die in Fig. 4 dargestellte Rollenpresse besteht aus einem Walzenpaar 27, 28, zwischen welchem ein endloses Band 29 hindurchgeführt ist, das über Transportrollen 30, 31 geführt ist. Ferner ist eine Wasserzuführung 32 sowie eine Reinigungswalze 33 vorgesehen. Dadurch wird eine Wasserreinigungsvorrichtung gebildet, welche eine Reinigung der Walze 27 bewirkt.

Am endlosen Band 29 befindet sich die Unterlage 4 mit der Zurichtung 6 und dem Spaltleder 7. Diese Unterlage 4 mit der Zurichtung 6 und dem Spaltleder 7 wird somit zwischen den Walzen 27, 28 hindurchtransportiert, wodurch die Zurichtung 6 und das Spaltleder 7 miteinander verpreßt und Lufteinschlüsse ausgetrieben werden. Die Walze 27 besteht aus elastischem Material, damit Dickenunterschiede ausgeglichen werden können.

Selbstverständlich können auch mehrere Walzenpaare hintereinander angeordnet sein.

In Fig. 5 ist das zugerichtete Spaltleder 34 dargestellt. Dieses Spaltleder weist auf seiner der Zurichtung abgewendeten Seite 35 eine Struktur auf, welche von den kanalartigen Vertiefungen 17 bzw. von dem auf der Gegenfläche 10 der Vakuumvorrichtung befestigten Gitter gebildet ist. Die auf der gegenüberliegenden Seite des Spaltleders 34 vorhandenen vorspringenden Fasern od. dgl. 36 sind in einer Schicht 37 verankert, die aus einer Polybutadien enthaltenden Kunststoffdispersion gebildet ist. Diese Schicht enthält zweckmäßig Mikrohohlkugeln 38, die der Schicht eine Schaumstruktur verleihen. Die Schicht 37 ist zwischen 0,12 und 0,45 mm stark und nicht oder nicht ausgeprägt thermoplastisch, also leicht bis mäßig vernetzt. Diese Schicht 37 dient als Abstandhalter zwischen dem Spaltleder 35 mit seiner rauhen, faserigen Oberfläche 36 und einer das Finish bildenden Schicht 39, welche aus einer Polymerlösung hergestellt ist. Diese Schicht 39 weist eine genarbte, lederähnliche Oberfläche 40 auf, die von der strukturierten Oberfläche der Unterlage 4 herrührt. Die Schicht 39 ist weniger als 0,1 mm stark und besteht vorzugsweise aus Polyurethan oder enthält zumindest Polyurethan.

Wie bereits erwähnt, kann die Schicht 37 durch aufeinanderfolgendes Auftragen mehrerer Schichten von wässerigen Kunststoffdispersionen gebildet werden.

In Abänderung des erfindungsgemäßen Verfahrens kann dieses auch dazu benützt werden, wirtschaftlich und blasenfrei Zurichtungen aus Plastisolen und lösungsmittelarmen Polyurethanen herzustellen. Auch in diesem Fall erfolgt die Verbindung mit Kunststoffdispersionen.

Beispiel 1

Auf eine ca. 75 °C vorgeheizte Unterlage 4 aus Silikonkautschuk wird eine etwa 25 %ige Polyurethanlösung in einer Menge von ca. 120 g/m² naß aufgesprüht. In ca. 80 bis 90 Sekunden hat sich ein fester, lösungsmittelfreier Film gebildet. Anschließend wird auf eine Seite des Spaltleders eine für Zurichtungen an sich bekannte Polyurethandispersion, die ca. 15 Vol.-% Mikrohohlkugeln mit einer Hülle aus Polyvinylidenchlorid-Copolymerisat enthält, aufgesprüht und hierauf mit dieser Seite auf den verfestigten Film aufgelegt. Anschließend wird das Spaltleder mit der Beschichtung durch eine Rollenpresse geschickt und hierauf in einer Vakuumvorrichtung weiterbehandelt, deren Platte 3 auf eine Temperatur von + 85 °C aufgeheizt ist. Dabei trocknet die Polyurethandispersion und verbindet sich mit dem Spaltleder. Das zugerichtete Spaltleder kann nach ca. 2 min. der Vakuumeinrichtung entnommen werden.

### Beispiel 2

Auf eine Unterlage 4 aus Silikonkautschuk, deren Oberfläche das Negativ einer Lederstruktur aufweist, wird eine 18 %ige Polymerlösung aufgesprüht, welche aus Polyurethan und Nitrozellulose besteht. Nach dem Aufsprühen wird die Polymerlösung in einem Wärmekanal mittels Umluft getrocknet, so daß ein Film gebildet wird, der pro m² ca. 25 g wiegt. Danach wird eine ca. 50 %-ige Dispersion auf Basis Butadien in einer Schichtdicke von ca. 0,2 mm durch Gießen auf den Film aufgebracht. Auch diese Schicht wird in einem Wärmekanal mittels Umluft getrocknet. Die Dispersion enthält ca. 8 Vol.-% Mikrohohlkugeln mit einer Hülle aus Polyvinylidenchlorid-Copolymerisat, ca. 3 % Vernetzer, bestehend aus Schwefel und einer Zinkverbindung und ca. 4 Teile Ruß als Pigment. Nach der Verfestigung dieser Dispersion wird eine weitere Schicht einer Dispersion mit gleicher Zusammensetzung in einer Schichtdicke von 0,15 mm ebenfalls durch Gießen aufgebracht. Sofort danach wird auf die aufgebrachte Dispersion in ihrer Naßphase ein Spaltleder aufgelegt und in einer Rollenpresse angedrückt, und zwar so, daß nach dem Andrücken ca. 15 g Dispersion in Transportrichtung gesehen endseitig herausgequetscht wird. Im Anschluß daran wird das mit der Beschichtung versehene Spaltleder in einer Vakuumvorrichtung behandelt, deren beheizte Platte eine Temperatur von ca. 90 °C aufweist.

### Beispiel 3

Auf eine Unterlage 4 aus Silikonkautschuk mit einer strukturierten Oberfläche werden ca. 150 g/m² einer Polymerlösung aus Polyurethan aufgesprüht, die ca. 15 % Feststoffe enthält. Auf dem nach Trocknung der Polymerlösung entstehenden Film werden ca. 200 g/m² einer wässerigen Dispersion durch Sprühen aufgetragen, die zu 40 % aus Polybutadien, zu 40 % aus Polyacrylat und zu 20 % aus Polyurethan besteht. Die Dispersion enthält 3 %, bezogen auf das Gesamtgewicht, ein Treibmittel enthaltende Teilchen aus Polyvinylidenchlorid. Der Feststoffanteil dieser Mischdispersion liegt bei ca. 55 %. Die aufgetragene Dispersionsschicht wird anschließend mit der strukturierten Unterlage 4 auf ein Transportband 29 gelegt und durch dieses Transportband mit einer Geschwindigkeit von 3 m/min durch ein hochfrequentes Feld transportiert. Das Hochfrequenzfeld wird durch einen 12 kW-Generator erzeugt. Die etwa 2 mm dicke Unterlage 4 aus Silikonkautschuk mit einer strukturierten Oberfläche erwärmt sich dabei nicht oder kaum, desgleichen die verfestigte, aus der Polymerlösung gebildete Schicht, wogegen die Dispersionsschicht wegen des dielektrischen Polyacrylats und des vorhandenen Wassers auf ca. 100 °C erwärmt wird. Dabei trocknet die Dispersionsschicht und es bilden sich gleichzeitig aus den Kompaktteilchen die Mikrohohlkugeln. Die getrocknete Schicht weist eine Dicke von ca. 0,22 mm auf. Werden keine Kompaktteilchen verwendet, so würde die Dicke der aufgebrachten Dispersionsschicht von 0,2 mm im nassen Zustand auf ca. 0,11 mm im trockenen Zustand reduziert werden.

Auf die verfestigte Dispersionsschicht werden ca. 150 g/m² einer 50 %igen Polybutadiendispersion, die ca. 8 Vol.-% Mikrohohlkugeln enthält, aufgetragen. Anschließend wird auf diese noch nasse Dispersionsschicht das Spaltleder aufgelegt. Darauf erfolgt eine Weiterbehandlung in der Rollenpresse und im Anschluß daran zusammen mit der Unterlage 4 in der Vakuumvorrichtung, deren Metallplatte 3 eine Temperatur von 115 °C aufweist. Nach ca. 50 sec. kann das fertig zugerichtete Spaltleder aus der Vakuumvorrichtung entnommen und von der Unterlage 4 abgenommen werden.

### Beispiel 4

Auf eine Unterlage 4 aus Silikonkautschuk mit einer strukturierten Oberfläche wird zunächst eine Polymerlösung und nach deren Verfestigung eine Kunststoffdispersion aufgetragen, wie dies in Beispiel 2 beschrieben wurde. Anstelle des Spaltleders wird auf die noch nasse, zuletzt aufgetragene Schicht der Kunststoffdispersion ein elastisches Gewebe, das in Längsrichtung elastomere Fasern aus Polyurethan enthält, aufgelegt. Das Gewebe wird vor dem Auflegen um 80 % in seiner Längsrichtung gedehnt und in einen sehr flachen Kunststoffrahmen in dieser gedehnten Lage festgehalten. Nach dem Auflegen des im Rahmen eingespannten Gewebes erfolgt eine Weiterbehandlung in der Vakuumvorrichtung. Am Ende der Weiterbehandlung in der Vakuumvorrichtung wird das zugerichtete elastische Gewebe mit dem Rahmen, der etwas größer als die Unterlage 4 ist, von dieser Unterlage abgenommen, und das Gewebe aus dem Rahmen herausgenommen. Hiebei stellt sich das zugerichtete Gewebe in Längsrichtung nahezu vollständig wieder zurück. Dies erfolgt deshalb, da die Zurichtung in sich stauchbar und weich ist. Das so zugerichtete Material kann beliebig oft elastisch gedehnt werden und stellt sich immer wieder in seine Ausgangslage zurück.

### Patentansprüche

1. Verfahren zum Zurichten von Spaltleder ode Vliesen, wobei zunächst ein flüssiges Beschichtungsmaterial auf eine strukturierte Unterlage derart aufgebracht und trocknen gelassen wird, daß ein die Zurichtung bildender Film entsteht, welcher über eine flüssig aufgetragene Verbindungsschicht mit dem Spaltleder oder Vlies verbunden wird, welches mittes einer Rollenpresse an den Film angepreßt wird, und wobei nach dem Trocken der Verbindungsschicht das zugerichtete Spaltleder oder Vlies von der Unterlage entfernt wird, dadurch gekennzeichnet, daß das flüssige Beschichtungsmaterial in einer dünnen Schicht auf eine vorerwärmte Unterlage aufgespritzt oder aufgegossen wird, wobei zumindest die die Struktur aufweisende Oberfläche der Unterlage aus Silikonkautschuk besteht, daß hierauf wenigstens eine Schicht einer vernetzbaren, wässerigen vorzugsweise Polyurethan enthaltenden Kunststoffdispersion zur Bildung der Verbindungsschicht entweder auf den Film oder auf die eine Seite des Spaltleders oder Vlieses aufgebracht, beispielsweise aufgespritzt oder aufgegossen wird, derart, daß das Spaltleder oder Vlies mit der Kunststoffdispersion in ihrer Naßphase in Berührung gebracht wird, daß anschließend eine Verpresung mittels der Rollenpresse mit einem solchen Druck erfolgt, daß zwischen dem Spaltleder oder Vlies und dem die Zurichtung bildenden Film ein Teil der aufgebrachten Kunststoffdispersion, vorzugsweise mehr als 3% der aufgebrachten Gesamtmenge, herausgedrückt wird, und daß anschließend die Unterlage mit dem zugerichteten Spaltleder oder Vlies auf einer beheizten Abstützung abgestützt und dadurch von unten erwärmt wird und geleichzeitig auf die der Unterlage abgewendeten Seite des zugerichteten Spaltleders oder Vlieses mittels einer Gegenfläche ein Druck ausgeübt und dieses Spaltleder oder Vlies einer Vakuumbehandlung unterworfen wird.

2. Verfahren nach Anspruch 1, dadurch gekennzeichnet, daß zunächst eine Schicht einer wässerigen Kunststoffdispersion auf den auf der Unterlage (4) gebildeten Film aufgebracht und anschließend trocknen gelassen wird, worauf eine zweite Schicht einer Kunststoffdispersion auf diese erste, getrocknete Schicht aufgebracht, beispielsweise aufgespritzt oder aufgegossen, wird und daß auf diese zweite Schicht einer Kunststoffdispersion sofort in der Naßphase das Spaltleder oder Vlies aufgelegt wird, worauf die so gebildete Beschichtung und das Spaltleder oder Vlies miteinander verpreßt und einer Vakuumbehandlung unterworfen werden.

3. Verfahren nach Anspruch 1 oder 2, dadurch gekennzeichnet, daß die Unterlage (4) auf eine Temperatur unter 100 °C, vorzugsweise auf etwa 95 °C erwärmt wird.

4. Verfahren nach Anspruch 1 oder 2, dadurch gekennzeichnet, daß auf die Unterlage eine polymerlösung aufgebracht wird.

5. Verfahren nach Anspruch 4, dadurch gekennzeichnet, daß die polymerlösung 12 bis 28 % eines polymers, vorzugsweise Polyurethan, sowie gegebenenfalls Nitrozellulose, enthält.

6. Verfahren nach einem der Ansprüche 1 bis 5, dadurch gekennzeichnet, daß die wässerige Kunststoffdispersion polybutadien sowie gegebenenfalls Polyurethan und/oder Polyacrylat und/oder Polyvinylacetat-Athylen-Copolymerisat und/oder Polyacrylnitril bzw. Polyacrylat sowie gegebenenfalls ein Vernetzungsmittel, beispielsweise eine Zinkverbindung enthält.

7. Verfahren nach einem der Ansprüche 1 bis 6, dadurch gekennzeichnet, daß der wässerigen Kunststoffdispersion Mikrohohlkugeln (38), deren dünne Hülle aus Vinylidenchlorid-Copolymerisat besteht und deren Inneres ein Gas enthält, und/oder ein Treibmittel enthaltende Kompaktteilchen aus Vinylidenchlorid-Copolymerisat, beigemengt werden, aus welchen durch Wärmezufuhr die erwähnten Mikrohohlkugeln in situ gebildet werden.

8. Verfahren nach einem der Ansprüche 1 bis 7, dadurch gekennzeichnet, daß die Verpressung in einer Vakuumvorrichtung (Fig. 1 bis 3) erfolgt, in der zusätzlich die Beschichtung (6) und das Spaltleder oder Vlies der Vakuumbehandlung unterworfen werden.

9. Verfahren nach einem der Ansprüche 1 bis 8, dadurch gekennzeichnet, daß das Spaltleder (7) oder Vlies mit der Beschichtung durch die Rollenpresse (Fig. 4) mit eine Geschwindigkeit von weniger als 5 m/min, vorzugsweise weniger als 3 m/min, hindurchgeführt wird.

10. Vorrichtung zur Durchführung des Verfahrens nach einem der Ansprüceh 1 bis 9, dadurch gekennzeichnet, daß für das Verpressen eine Rollenpresse (Fig. 4) vorgesehen ist, die von wenigstens einem Walzenpaar (27, 28) gebildet ist, wobei wenigstens eine Walze (27) jedes Walzenpaares aus einem elastischen Material besteht und/oder federnd gelagert ist.

11. Vorrichtung nach Anspruch 10, dadurch gekennzeichnet, daß zumindest ein Walzenpaar (27, 28) mit einer Wasserreinigungsvorrichtung (32, 33) versehen ist.

12. Vorrichtung nach Anspruch 10 oder 11, dadurch gekennzeichnet, daß ein durch die Rollenpresse hindurchgeführtes Transportband (29) für die Unterlage (4) vorgesehen ist.

13. Vorrichtung nach Anspruch 12, dadurch gekennzeichnet, daß die Unterlage vom Transportband gebildet ist.

14. Vorrichtung zur Durchführung des Verfahrens nach einem der Ansprüche 1 bis 9, dadurch gekennzeichnet, daß die Vakuumvorrichtung wenigstens eine starre, beheizte Platte (3) mit einer mit einer Prägung versehenen Unterlage (4) für das mit der Beschichtung versehene Spaltleder oder Vlies und eine dieser Unterlage (4) gegenüberliegende, vorzugsweise oberhalb dieser Unterlage (4) angeordnete Gegenfläche (10) aufweist, wobei Unterlage und Gegenfläche aus einem nicht saugfähigen Material bestehen und relativ zueinander bewegbar angeordnet sind und in ihrer einen Endstellung einen mittels einer Dichtung (16), beispielsweise aus Silikonkautschuk, abgedichteten Hohlraum begrenzen, der mit einer Vakuumeinrichtung in Verbindung steht, die im Hohlraum ein Vakuum erzeugt.

15. Vorrichtung nach Anspruch 14, dadurch gekennzeichnet, daß sowohl die Unterlage (4) als auch die Gegenfläche (10) aus Kunststoff oder Kautschuk, vorzugsweise aus Silikonkautschuk, bestehen oder mit einem Überzug aus Kunststoff oder Kautschuk, vorzugsweise Silikonkautschuk, versehen sind.

16. Vorrichtung nach Anspruch 15, dadurch gekennzeichnet, daß der Kunststoff oder Kautschuk durch eine Einlage aus Gewebe und/oder Draht verstärkt ist.

17. Vorrichtung nach Anspruch 14, 15 oder 16, dadurch gekennzeichnet, daß die Gegenfläche (10) mit kannalartigen Vertiefungen (17) wie Nuten, Riffelungen od. dgl. versehen ist, die mit dem abgedichteten Hohlraum in Verbindung stehen.

18. Vorrichtung nach Anspruch 14, 15 oder 16 dadurch gekennzeichnet, daß an der Gegenfläche (10) ein Gitter, beispielsweise ein das Gitter bildendes Gewebe, aus nicht saugfähigem Material, vorzugsweise aus Monofasern, beispielsweise Po lyester, befestigt ist, das gegebenenfalls mit Silikon imprägniert ist.

19. Vorrichtung nach einem der Ansprüche 14 bis 18, dadurch gekennzeichnet, daß die Gegenfläche (10) von einer Membrane (23) gebildet ist, wobei der Raum zwischen der Membrane und der Unterlage (4) mit der Vakuumeinrichtung in Verbindung steht.

20. Vorrichtung nach einem der Ansprüche 14 bis 19, dadurch gekennzeichnet, daß die Unterlage (4) an der beheizten, vorzugsweise aus Metall bestehenden, platte (3) abhebbar abgestützt ist.

21. Vorrichtung nach einem der Ansprüche 14 bis 20, dadurch gekennzeichnet, daß die Auflage (4) und die Gegenfläche (10) in einer Richtung parallel zur Ebene dieser Auflage bzw. Gegenfläche relativ zueinander verschiebbar angeordnet sind.

22. Zugerichtetes Spaltleder oder Vlies, erhalten durch ein Verfahren nach einem der Ansprüche 1 bis 9 dadurch gekennzeichnet, daß die rauhe Seite des Spaltleders (34) oder Vlies-es/mit ihren abstehenden Fasern (36) od. dgl. in eine; vorzugsweise eine Schaumstruktur aufweisende, aus einer wässerigen Kunststoffdispersion gebildete, insbesondere Polybutadien enthaltende Schicht (37) mit einer Stärke zwischen 0,12 und 0,45 mm eingebettet ist, deren dem Spaltleder (34) oder Vlies abgewendete Fläche mit einem, vorzugsweise aus einer verfestigten Polymerenlösung bestehenden, eine Narbenstruktur (40) aufweisenden Finish (39) mit einer Stärke von weniger als 0,1 mm versehen ist (Fig. 5).

## Claims

1. Process for dressing split leather or non-woven fabrics, wherein a liquid coating material is firstly applied to a structured substrate and is allowed to dry so as to produce a film which forms the dressing and is connected via a connecting layer applied in liquid form to the split leather or non-woven fabric, the split leather or non-woven fabric being pressed onto the film by means of a roller press and wherein the dressed split leather or non-woven fabric is removed from the substrate after the drying of the connecting layer, characterised in that the liquid coating material is sprayed or poured in a thin layer onto a preheated substrate, wherein at least the structured surface of the substrate consists of silicone rubber, in that, to form the connecting layer, at least one layer of a cross-linkable aqueous preferably polyurethane-containing plastics material dispersion is then applied, for example sprayed or poured, onto the film or onto one side of the split leather or nonwoven fabric in such a manner that the split leather or nonwoven fabric is brought into contact with the plastics material dispersion in its wet phase, in that pressing subsequently takes place by means of the roller press with such a pressure that a proportion of the applied plastics material dispersion, preferably more than 3% of the applied total quantity, is squeezed out between the split leather or non-woven fabric and the film forming the dressing and in that the substrate with the dressed split leather or nonwoven fabric is subsequently supported on a heated support and is thus heated from below and a pressure is simultaneously exerted onto the side of the dressed split leather or non-woven fabric remote from the substrate by means of an opposing face and this split leather or non-woven fabric is subjected to a vacuum treatment.

2. Process according to claim 1, characterised in that at first a layer of an aqueous plastics material dispersion is applied onto the film formed on the substrate (4) and is subsequently allowed to dry, whereupon a second layer of plastics material dispersion is applied, for example sprayed or poured onto this first, dried layer, and that the split leather or non-woven fabric is immediately in the wet stage laid onto this second layer of a plastics material dispersion, whereupon the so formed coating and the split leather or non-woven fabric are compressed together and are subjected to a vacuum treatment.

3. Process according to claim 1 or 2, characterised in that the substrate (4) is heated to a temperature below 100°C, preferably to about 95°C.

4. Process according to claim 1 or 2, characterised in that a polymer solution is applied onto the substrate.

5. Process according to claim 4, characterised in that the polymer solution contains 12 to 28% of a polymer, preferably polyurethane, and, if desired, nitrocellulose.

6. Process according to any one of claims 1 to 5, characterised in that the aqueous plastics material dispersion contains polybutadiene and, if desired, polyurethane and/or polyacrylate and/or polyvinylacetateethylene-copolymer and/or polyacrylonitrile or polyacrylate and, if desired, a cross-linking agent, for example a zinc compound.

7. Process according to any one of claims 1 to 6, characterised in that to the aqueous plastics material dispersion there are admixed hollow microspheres (38), the thin shell of which consists of vinylidene chloride copolymer and the interior of which contains a gas, and/or compact particles of a vinylidene chloride copolymer containing an inflating agent, from which the said hollow microspheres are formed in situ by means of heat supply.

8. Process according to any one of claims 1 to 7, characterised in that the compression is carried out in a vacuum apparatus (Figures 1 to 3) in which additionally the coating (6) and the split leather or non-woven fabric are subjected to the vacuum treatment.

9. Process according to any one of claims 1 to 8, characterised in that the split leather (7) or non-woven fabric together with the coating is passed through the roller press (Figure 4) at a velocity of less than 5 m/min, preferably less than 3 m/min.

10. Apparatus for carrying out the process according to any one of claims 1 to 9, characterised in that a roller press (Figure 4) is provided for the compressing action, which roller press is formed by at least one roller pair (27, 28), wherein at least one roller (27) of each roller pair consists of an elastic material and/or is resiliently mounted.

11. Apparatus according to claim 10, characterised in that at least one roller pair (27, 28) is provided with a water cleaning means (32, 33).

12. Apparatus according to claim 10 or 11, characterised in that a conveyor belt (29) for the substrate (4) is provided which is passed through the roller press.

13. Apparatus according to claim 12, characterised in that the substrate is formed by the conveyor belt.

14. Apparatus for carrying out the process according to any one of claims 1 to 9, characterised in that the vacuum apparatus comprises at least one rigid, heated plate (3) having a textured substrate (4) for the coated split leather or non-woven fabric, and a countersurface (10) opposing this substrate (4) and being preferably disposed above this substrate (4), the substrate and the countersurface consisting of non-absorbent material and being movable relative to each other and limiting in their one end position a hollow space sealed by a sealing means (16), preferably of silicone rubber, said hollow space communicating with a vacuum device which produces a vacuum in the hollow space.

15. Apparatus according to claim 14, characterised in that the substrate (4) as well as the countersurface (10) consist of plastics material or rubber, preferably of silicone rubber, or are provided with a coating of plastics material or rubber, preferably silicone rubber.

16. Apparatus according to claim 15, characterised in that the plastics material or rubber is reinforced by an insertion of textile and/or wire.

17. Apparatus according to claim 14, 15 or 16, characterised in that the countersurface (10) is provided with channel-like recesses (18), such as grooves, corrugations or the like, which communicate with the sealed hollow space.

18. Apparatus according to claim 14, 15 or 16, characterised in that a grid, for example a textile forming the grid of non-absorbent material, preferably of monofibres, for example polyester, is fixed to the countersurface (10), which grid, if desired, is impregnated with silicone.

19. Apparatus according to any one of claims 14 to 18, characterised in that the countersurface (10) is formed by a membrane (23), the space between the membrane and the substrate (4) communicating with the vacuum device.

20. Apparatus according to any one of claims 14 to 19, characterised in that the substrate (4) is removably supported on the heated plate (3) which preferably consists of metal.

21. Apparatus according to any one of claims 14 to 20, characterised in that the support (4) and the countersurface (10) are shiftable relative to each other in a direction parallel to the plane of this support or countersurface, respectively.

22. Dressed split leather or non-woven fabric, obtained by a process according to any one of claims 1 to 9, characterised in that the rough side of the split leather (34) or non-woven fabric is embedded with its projecting fibres (36) or the like in a layer (37) having a thickness between 0.12 and 0.45 mm and having preferably a foam structure and being formed by an aqueous plastics material dispersion, particularly containing polybutadiene, the surface of which layer remote from the split leather (34) or non-woven fabric is provided with a finish (39) having a thickness of less than 0.1 mm, consisting preferably of a solidified polymer solution and having a grain structure (40) (Figure 5).

## Revendications

1. Procédé d'apprêtage de cuir fendu ou de cardes, dans lequel une substance de revêtement fluide est tout d'abord déposée et mise à sécher, sur un support structuré, de manière à donner naissance à un film formant l'apprêt et relié, par l'intermédiaire d'une couche de liaison déposée à l'état liquide, au cuir fendu ou à la carde, lequel/laquelle est comprimé(e) sur le film au moyen d'une presse à rouleaux, et dans lequel, après le séchage de la couche de liaison, le cuir fendu ou la carde apprêté est enlevé du support, caractérisé par le fait que la substance de revêtement fluide est pulvérisée ou déversée en une couche mince sur un support préchauffé, au moins la surface du support qui est munie de la structure étant constituée de caoutchouc siliconé ; par le fait qu'au moins une couche d'une dispersion aqueuse de matières plastiques, réticulable et renfermant de préférence du polyuréthanne, est ensuite déposée, par exemple pulvérisée ou déversée soit sur le film, soit sur l'un des côtés du cuir fendu ou de la carde, en vue de former la couche de liaison, de telle sorte que le cuir fendu ou la carde soit mis en contact avec la dispersion de matières plastiques dans sa phase mouillée ; par le fait qu'une compression s'opère ensuite, au moyen de la presse à rouleaux, sous une pression telle qu'une part de la dispersion de matières plastiques déposée, de préférence plus de 3 % de la quantité totale déposée, soit exprimée entre le cuir fendu ou la carde et le film formant l'apprêt ; et par le fait que le support associé au cuir fendu ou à la carde apprêté est ensuite placé en appui sur un soutien chauffé, en étant ainsi chauffé par-dessous, une pression étant concomitamment exercée, au moyen d'une surface complémentaire, sur le côté du cuir fendu ou de la carde apprêté qui est tourné à l'opposé du support, et ce cuir fendu ou cette carde étant soumis à un traitement par le vide.

2. Procédé selon la revendication 1, caractérisé par le fait qu'une couche d'une dispersion aqueuse de matières plastiques est tout d'abord déposée sur le film formé sur le support (4),pour être ensuite mise à sécher, après quoi une seconde couche d'une dispersion de matières plastiques est déposée, par exemple pulvérisée ou déversée sur la première couche séchée ; et par le fait que le cuir fendu ou la carde est immédiatement placé en phase mouillée sur cette seconde couche d'une dispersion de matières plastiques, après quoi le revêtement ainsi formé et le cuir fendu ou la carde sont solidarisés par compression et sont soumis à un traitement par le vide.

3. Procédé selon la revendication 1 ou 2, caractérisé par le fait que le support (4) est chauffé jusqu'à une température inférieure à 100°C, de préférence jusqu'à environ 95°C.

4. Procédé selon la revendication 1 ou 2, caractérisé par le fait qu'une solution de polymères est déposée sur le support.

5. Procédé selon la revendication 4, caractérisé par le fait que la solution de polymères renferme de 12 à 28 % d'un polymère, de préférence du polyuréthanne, ainsi qu'éventuellement de la nitrocellulose.

6. Procédé selon l'une des revendications 1 à 5, caractérisé par le fait que la dispersion aqueuse de matières plastiques renferme du polybutadiène, ainsi qu'éventuellement du polyuréthanne et/ou du polyacrylate et/ou un copolymérisat de polyacétate de vinyle-éthylène et/ou du polyacrylnitrile ou respectivement du polyacrylate, ainsi qu'éventuellement un agent de réticulation, par exemple un composé à base de zinc.

7. Procédé selon l'une des revendications 1 à 6, caractérisé par le fait qu'on ajoute,à la dispersion aqueuse de matières plastiques,des microsphères creuses (38) dont l'enveloppe mince consiste en un copolymérisat de chlorure de vinylidène et dont l'intérieur renferme un gaz, et/ou des particules compactes d'un copolymérisat de chlorure de vinylidène qui renferment un agent porogène, et à partir desquelles les microsphères creuses précitées sont formées "in situ" par apport de chaleur.

8. Procédé selon l'une des revendications 1 à 7, caractérisé par le fait que la compression.a lieu dans un dispositif à dépression (figures 1 à 3), dans lequel le revêtement (6) et le cuir fendu ou la carde sont soumis,en plus, au traitement par le vide.

9. Procédé selon l'une des revendications 1 à 8, caractérisé par le fait qu'on fait défiler le cuir fendu (7) ou la carde avec le revêtement, à travers la presse à rouleaux (figure 4), à une vitesse inférieure à 5 m/min, de préférence inférieure à 3 m/min.

10. Appareillage pour la mise en oeuvre du procédé selon l'une des revendications 1 à 9, caractérisé par le fait qu'une presse à rouleaux (figure 4) formée par au moins une paire de rouleaux (27, 28) est prévue pour la compression, au moins un rouleau (27) de chaque paire de rouleaux consistant en un matériau élastique et/ou étant monté élastiquement.

11. Appareillage selon la revendication 10, caractérisé par le fait qu'au moins une paire de rouleaux (27, 28) est pourvue d'un dispositif (32, 33) de nettoyage à l'eau.

12. Appareillage selon la revendication 10 ou 11, caractérisé par le fait qu'il est prévu une bande (29) transporteuse du support (4), qui défile à travers la presse à rouleaux.

13. Appareillage selon la revendication 12, caractérisé par le fait que le support est formé par la bande transporteuse.

14. Appareillage pour la mise en oeuvre du procédé selon l'une des revendications 1 à 9, caractérisé par le fait que le dispositif à dépression présente au moins une plaque rigide chauffée (3) avec un support (4) pourvu d'une empreinte pour le cuir fendu ou la carde muni du revêtement, ainsi qu'une surface complémentaire (10) qui est située en vis-à-vis de ce support (4) et se trouve,de préférence,au-dessus dudit support (4), le support et la surface complémentaire consistant en un matériau non absorbant, étant mobiles l'un par rapport à l'autre et délimitant, dans l'une de leurs positions extrêmes, une cavité dont l'étanchéité est assurée au moyen d'une garniture d'étanchement (16) consistant par exemple en du caoutchouc siliconé, et qui est raccordée à un dispositif de dépression qui crée un vide dans cette cavité.

15. Appareillage selon la revendication 14, caractérisé par le fait qu'aussi bien le support (4) que la surface complémentaire (10) consistent en une matière plastique ou un caoutchouc, de préférence du caoutchouc siliconé, ou bien sont munis d'un revêtement en matière plastique ou en caoutchouc, de préférence en caoutchouc siliconé

16. Appareillage selon la revendication 15, caractérisé par le fait que la matière plastique ou le caoutchouc est renforcé, par l'intermédiaire d'une structure incorporée en tissu et/ou en fil métallique.

17. Appareillage selon la revendication 14, 15 ou 16, caractérisé par le fait que la surface complémentaire (10) est dotée de renfoncements (17) du type canaux, tels que des gorges, des cannelures ou structures analogues, qui communiquent avec la cavité rendue étanche.

18. Appareillage selon la revendication 14, 15 ou 16, caractérisé par le fait qu'un treillis éventuellement imprégné de silicone, par exemple un tissu formant ce treillis et consistant en un matériau non absorbant, de préférence par exemple en des monofibres de polyester, est fixé à la surface complémentaire (10).

19. Appareillage selon l'une des revendications 14 à 18, caractérisé par le fait que la surface complémentaire (10) est formée par une membrane (23), l'espace situé entre la membrane et le support (4) étant raccordé au dispositif de dépression.

20. Appareillage selon l'une des revendications 14 à 19, caractérisé par le fait que le support (4) est en appui, avec faculté de soulèvement, sur la plaque chauffée (3) consistant de préférence en un métal.

21. Appareillage selon l'une des revendications 14 à 20, caractérisé par le fait que le support (4) et la surface complémentaire (10) sont agencés avec faculté de coulissement relatif, dans une direction parallèle au plan respectif de ce support ou de cette surface complémentaire.

22. Cuir fendu ou carde apprêté obtenu suivant un procédé selon l'une des revendications 1 à 9, caractérisé par le fait que le côté rugueux du cuir fendu (34) ou de la carde est noyé, par ses fibres saillantes (36) ou éléments analogues, dans une couche (37) d'une épaisseur comprise entre 0,12 et 0,45 mm, qui présente de préférence la structure d'une mousse, est formée d'une dispersion aqueuse de matières plastiques et renferme en particulier du polybutadiène, couche dont la surface tournée à l'opposé du cuir fendu (34) ou de la carde est munie d'un fini (39) qui consiste, de préférence, en une solution de polymères solidifiée, possède une structure refendue (40) et présente une épaisseur inférieure à 0,1 mm (figure 5).

FIG.1

FIG.2

FIG.3

# FIG. 4

# FIG.5